# EUROPÄISCHE PATENTSCHRIFT

(11) **EP 0 574 907 B1**
(45) Veröffentlichungstag und Bekanntmachung des Hinweises auf die Patenterteilung: **17.09.1997**
(21) Anmeldenummer: 93109673.9
(22) Anmeldetag: 17.06.1993
(51) Int. Cl.: A23G 9/02, A23G 9/20, A23L 1/308

(54) **Speiseeis**
Ice-cream
Crème glacée

(30) Priorität: 19.06.1992 DE 4219971
(43) Veröffentlichungstag der Anmeldung: 22.12.1993
(73) Patentinhaber: RONCADIN GmbH, D-49084 Osnabrück (DE)
(72) Erfinder: Abkemeyer, Josef, Dipl.-Ing., D-4505 Bad Iburg (DE)
(74) Vertreter: Busse & Busse Patentanwälte

(56) Entgegenhaltungen:
- US-A- 4 908 223
- DATABASE WPI Week 9317, Derwent Publications Ltd., London, GB; AN 93-139532 & JP-A-5 076 310 (TAIYO CHEM IND CO LTD) 30. März 1993
- DATABASE WPI Week 8416, Derwent Publications Ltd., London, GB; AN 84-097621 & JP-A-59 042 850 (DAICEL CHEM IND KK) 9. März 1984

## Beschreibung

Die Erfindung betrifft ein Speiseeis nach dem Oberbegriff des Anspruchs 1, ein verfahren zu dessen Herstellung nach dem Oberbegriff des Anspruchs 10 sowie einen Stabilisator nach dem Oberbegriff des Anspruchs 11.

Die Herstellung von Speiseeis muß verschiedenen kritischen Ansprüchen genügen. Speiseeis allgemein, d.h. als Industrieprodukt wie auch als Frischeisprodukt hat geschmacklichen Anforderungen zu genügen, die sich einerseits aus den Zutaten, andererseits aber auch aus der Konsistenz des Eises ergeben. Hinsichtlich der Konsistenz ist insbesondere ein hoher Luftaufschlag von Bedeutung, der das Eis leicht und zart schmecken läßt und einen intensiven Aufschluß der Geschmacksstoffe gewährleistet.

Während zum sofortigen Verzehr bestimmtes Frischeis ohne Haltbarkeits-Zutaten auskommen kann, ist industriell gefertigtes, langzeitig lagerbares Speiseeis mit Stabilisatoren zu versehen. Diese Stabilisatoren können eine Vielzahl von Stoffen und Verbindungen, insbesondere Emulgatoren und Hydrokolloide, umfassen, die die Konsistenz, die Struktur und das Abschmelzverhalten des Speiseeises beeinflussen und weiterhin die Festigkeit, Dauerhaftigkeit, Lagerbeständigkeit oder Unveränderlichkeit unterstützen.

Soweit die Stabilisatoren mit verschiedenen Einzelbestandteilen darauf ausgerichtet sind, die Konsistenz und Struktur des Speiseeises bei der Konfektionierung, Lagerung und dem Transport zu stabilisieren, sind sie häufig den qualitativen und geschmacklichen Ansprüchen abträglich. Insbesondere wird damit oft nur ein begrenzter Luftaufschlag möglich. Darüberhinaus finden sich bei den Hydrokolloiden unter den Stabilisatorbestandteilen zum Teil synthetische Produkte, die auch der Kennzeichnungspflicht ("E-Nummer") unterliegen und die im übrigen der Art und Herkunft nach nicht ohne weiteres akzeptiert werden.

Aufgabe der Erfindung ist es dementsprechend, ein Speiseeis zu schaffen, daß mit möglichst natürlichen Zutaten auskommt, dabei aber qualitativ, insbesondere hinsichtlich des Luftaufschlags verbessert ist, ohne dabei Nachteile hinsichtlich der Kosten und hinsichtlich der Verarbeitbarkeit und Lagerfähigkeit des Speiseeises in Kauf zu nehmen zwingt.

Gemäß der Erfindung wird diese Aufgabe von einem Speiseeis nach dem Oberbegriff des Anspruchs 1 ausgehend mit den kennzeichnenden Merkmalen des Anspruchs 1 gelöst. Weiterhin wird diese Aufgabe mit einem Verfahren gelöst, daß die Merkmale des Anspruchs 10 aufweist. Schließlich wird gemäß der Erfindung hierzu ein Stabilisator mit den Merkmalen des Anspruchs 11 vorgesehen.

Gemäß der Erfindung läßt sich ein Stabilisator und damit auch ein Speiseeis bereitstellen, das auf synthetische Zusätze verzichtet und das einem Bedürfnis nach natürlichen Lebensmitteln entgegenkommt. Das so gefertigte Speiseeis zeichnet sich auch in einer für den Verbraucher erkennbaren Weise dadurch aus, daß kennzeichnungspflichtige Zusätze, wie sie sonst auf der Verpackung mit den sogenannten "E-Nummern" vermerkt werden, nicht enthalten sind. Dieser insbesondere für den kritischen Verbraucher bemerkenswerte Fortschritt wird nicht etwa mit Nachteilen in den sonstigen Eigenschaften des Speiseeises, etwa den geschmacksbeeinflussenden Eigenschaften oder der Verarbeitbarkeit und Lagerfähigkeit erkauft.

Das so gefertigte Speiseeis läßt sich vielmehr mit einem Luftaufschlag von über 100% versehen. Dies schafft geschmacklich die Wirkung eines leichten und zarten Speiseeises mit gutem Abschmelzverhalten, das den Wünschen des Verbrauchers entgegenkommt. Bei gleicher Volumenmenge bedeutet ein leichtes Speiseeis auch, daß weniger Masse verbraucht wird, daß also der Genuß vorteilhafterweise nur mit einer mäßigen Aufnahme von Zucker- und Fettmengen bei gebräuchlichen Eisrezepturen einhergeht. Darüberhinaus hat sich die Verwendung des Stabilisators auch bei fettreduzierten Speiseeissorten als erfolgreich erwiesen.

Die "mechanischen" Eigenschaften des Speiseeises nach der Erfindung sind sehr gut. Sowohl die Druck- und Scherbeanspruchungen beim Homogenisieren, Aufschlagen und Abfüllen wie auch die Dauerbelastungen bei Lagerung und Transport werden von dem Speiseeis nach der Erfindung schadlos aufgenommen. Es zeigt sich also, daß synthetische Zutaten im Speiseeis entbehrlich sind.

Ein gemäß der Erfindung erzielbarer hoher Luftaufschlag ist natürlich auch für den Hersteller von Interesse, da Speiseeis üblicherweise in Volumeneinheiten verkauft wird und der Materialverbrauch je Liter bei einem wesentlich über 100% liegenden Luftaufschlag geringer ist als bei einem wesentlich darunter liegenden Luftaufschlag.

Aus der US-A-4 908 223 sind für die Herstellung gefrorener Desserts Vorschläge zu entnehmen, diese mit gekochten Hafer- oder Reis-Produkten in einen Anteil von 30 % bis 70 % zu gestalten,um eine gesundheitsfördernde Zusammensetzung von diesen Bestandteilen zu erhalten. Dabei ist festgestellt worden, daß eine solche Zusammensetzung auf anderweitige Zusätze und Stabilisatoren, die oft künstlicher Natur sind, weitgehend oder ganz verzichtet werden kann. Solche Zusammensetzungen sind allerdings schon durch den hohen Stärkegehalt bestimmt, was bei der Speiseeisherstellung nicht in Betracht kommt.

Es hat bereits früher Versuche gegeben, für Speiseeis Stabilisatoren mit Bestandteilen von Eigelb bereitzustellen. Diesen wurde allerdings nur dann eine stabilisierende Wirkung zugesprochen, wenn die Erhitzung nicht über 56°C hinausging. Der erfindungsgemäße Stabilisator mit einem Anteil von Eigelb ist auch bei Erhitzung bis über 90°C wirksam. Bedeutsam hierfür sind insbesondere auch die Kombinationswirkung mit Milch- und Molkenproteinen, insbesondere solchen im nativen Zustand, d.h. ohne Strukturveränderung gegenüber dem ursprünglichen Zustand, die eine große Wasserbindung erzielen. Eiweißangereicherte Milch und Molkenproteine in dieser Hinsicht sind im Handel erhältlich und werden z.B. durch Ultrafiltration in den Eiweißanteilen angereichert. Diese führt auch dazu, daß die Heißhaltezeit auf eine oder gar mehrere Minuten verlängert werden kann.

Noch bedeutsamer ist das Zusammenwirken mit den pflanzlichen Rohfasern im Stabilisator, die die Aufgabe der Hydrokolloide als Dickungs- und Quellmittel übernehmen und die auch aufgrund hoher Wasserabsorption bereits bei geringen Anteilen an Rohfasern die Struktur der Emulsion günstig beeinflussen und die Interaktion zwischen Fettpartikeln, Milchprotein und wässeriger Phase unterstützen. Auch nachdem sich beim Gefrieren (Schockfrosten) eine Fettagglomeration und eine Gefrierstruktur aufbaut, wird die Emulsion bei der nachfolgenden Extrusion teilweise wieder gebrochen und führt zu einer günstigen trockenen Textur der Eiscreme. Dabei wird auch die Ausbildung grober Eiskristalle unterdrückt.

Die Wasserbindung ermöglicht beim Gefriervorgang die vorerwähnte hohe Lufthaltung beim Luftaufschlag. Beim Genuß des Speiseeises erzielen die pflanzlichen Rohfasern durch Bindung des beim Tauvorgang freigesetzten Wassers, so daß auch hier noch eine Stabilisierung erzielt wird. Auch der Geschmack wird dadurch erhalten und verfeinert, wobei dieser günstige Effekt auch bei kalorien- und fettreduzierten Speiseeisformen eintritt.

### Beispiel:

Aus 35% Sahne, 4% Milchpulver, 26,5% Wasser sowie 8% Glykosesirup, 14% Invertflüssigzucker und 3% Dextrose zuzüglich einer Stabilisator-Zusammensetzung aus etwa gleichen Teilen Eigelb und nativem Molkenprotein zuzüglich Haferrohfasern, wobei die Haferrohfasern bis zu 2% Gewichtsanteilen der gesamten Creme und die Stabilisatormenge insgesamt etwa 10% ausmacht, werden gemischt und danach auf 95° mit einer Heißhaltezeit 2 min. gehalten, danach in bekannter Weise homogenisiert und abgekühlt, um im Reifetank bei etwa 2°C 24 Std. zu lagern. Danach wird die gereifte Creme schockgefroren und mit einem mehr als 100%igen Luftaufschlag aufgeschlagen und anschließend durch einen Extruder abgefüllt. Das Ergebnis ist eine zarte und leichte Eiscreme guter Haltbarkeit und Lagerfähigkeit, die beim Verbrauch ein gutes Abschmelzverhalten zeigt.

## Patentansprüche

1. Speiseeis, industriell aus einer Creme von Milcherzeugnissen, Wasser und/oder sonstigen fetthaltigen Erzeugnissen mit hohem Luftaufschlag hergestellt und durch Zusatz von Stabilisatoren lagerfähig ausgebildet, dadurch gekennzeichnet, daß die Stabilisatoren eine Mischung von Eigelb, Milch- und Molkenproteinen und pflanzlichen Rohfasern umfassen.

2. Speiseeis nach Anspruch 1, dadurch gekennzeichnet, daß die pflanzlichen Fasern Getreiderohfasern umfassen.

3. Speiseeis nach Anspruch 2, dadurch gekennzeichnet, daß die Getreidefasern Haferrohfasern sind.

4. Speiseeis nach einem der Ansprüche 1 bis 3, dadurch gekennzeichnet, daß die pflanzlichen Fasern Gemüserohfasern umfassen.

5. Speiseeis nach einem der Ansprüche 1 bis 4, dadurch gekennzeichnet, daß die pflanzlichen Rohfasern bis zu 2% Gewichtsanteile im Speiseeis einnehmen.

6. Speiseeis nach Anspruch 5, dadurch gekennzeichnet, daß die pflanzlichen Rohfasern etwa 0,5% Gewichtsanteile im Speiseeis einnehmen.

7. Speiseeis nach Anspruch 5 oder 6, dadurch gekennzeichnet, daß die Stabilisatoren bis zu 15% Gewichtsanteile im Speiseeis einnehmen.

8. Speiseeis nach einem der Ansprüche 1 bis 7, dadurch gekennzeichnet, daß die Milch- und Molkenproteine nativ vorliegen und mit etwa 30% Gewichtsanteilen enthalten sind.

9. Speiseeis nach einem der Ansprüche 1 bis 8, dadurch gekennzeichnet, daß die Stabilisatoren keine synthetischen Bestandteile umfassen.

10. Verfahren zur industriellen Herstellung von Speiseeis nach einem der Ansprüche 1 bis 9, bei dem Ausgangsstoffe, zur Bildung der Creme und der Stabilisatoren vorgesehene Roh- und Zusatzstoffe gemischt und dann erhitzt, homogenisiert, gekühlt und dann zur Reifung einer Zwischenlagerung vor dem Gefrieren unterzogen werden, dadurch gekennzeichnet, daß das Erhitzen bei einer Temperatur von über 85°C und mit einer Heißhaltezeit von mindestens 1 min. erfolgt.

11. Stabilisator zur industriellen Herstellung von Speiseeis mit einem Anteil von Eingelb, dadurch gekennzeichnet, daß weitere Bestandteile des Stabilisators Milch- oder Molkenproteine sowie pflanzliche Rohfasern sind.

12. Stabilisator nach Anspruch 11, dadurch gekennzeichnet, daß er bis zu 50% Gewichtsanteile Eigelb, bis zu 60% Gewichtsanteile Molkenprotein und bis zu 20% Gewichtsanteile Haferrohfasern enthält.

## Claims

1. Ice cream, manufactured industrially from a cream of milk products, water and/or other fat-containing products with a high air impact and made storable by the addition of stabilisers, characterised in that the stabilisers comprise a mixture of egg-yolk, milk and dairy proteins and raw plant fibres.

2. Ice cream according to Claim 1, characterised in that the plant fibres comprise raw cereal fibres.

3. Ice cream according to Claim 2, characterised in that the cereal fibres are raw oat fibres.

4. Ice cream according to one of Claims 1 to 3, characterised in that the plant fibres include raw edible vegetable fibres.

5. Ice cream according to one of Claims 1 to 4, characterised in that the raw vegetable fibres occupy up to 2% by weight of the ice cream.

6. Ice cream according to Claim 5, characterised in that the raw vegetable fibres occupy approximately 0.5% by weight of the ice cream.

7. Ice cream according to Claim 5 or 6, characterised in that the stabilisers occupy up to 15% by weight of the ice cream.

8. Ice cream according to one of Claims 1 to 7, characterised in that the milk and dairy proteins are native and represent about 30% by weight.

9. Ice cream according to one of Claims 1 to 8, characterised in that the stabilisers do not comprise any synthetic constituents.

10. A method for the industrial manufacture of ice cream according to one of Claims 1 to 9, in which starting materials, raw products and additives provided in order to form the cream and the stabilisers are mixed and then heated, homogenised, cooled and then matured by being subjected to an interim storage prior to the freezing, characterised in that the heating takes place at a temperature of over 85 deg.C with a holding period of at least 1 min.

11. A stabiliser for the Industrial manufacture of ice cream with a proportion of egg yolk, characterised in that further constituents of the stabiliser are milk or dairy proteins as well as raw vegetable fibres.

12. A stabiliser according to Claim 11, characterised in that it contains up to 50% by weight egg yolk, up to 60% by weight dairy protein and up to 20% by weight raw oat fibres.

## Revendications

1. Glace alimentaire, industrielle et préparée à partir d'une crème de produits laitiers, d'eau et/ou d'autres produits gras, avec une incorporation élevée d'air et rendue stable par addition de stabilisants, caractérisée en ce que les stabilisants comprennent un mélange de jaune d'oeuf, de protéines de lait et de petit-lait et des fibres végétales brutes.

2. Glace alimentaire suivant la revendication 1, caractérisée en ce que les fibres végétales comprennent des fibres brutes de céréales.

3. Glace alimentaire suivant la revendication 2, caractérisée en ce que les fibres de céréales comprennent des fibres brutes d'avoine.

4. Glace alimentaire suivant l'une quelconque des revendications 1 à 3, caractérisée en ce que les fibres végétales comprennent des fibres brutes de légumes.

5. Glace alimentaire suivant l'une quelconque des revendications 1 à 4, caractérisée en ce que les fibres végétales brutes composent jusqu'à 2% en poids de la glace alimentaire.

6. Glace alimentaire suivant la revendication 5, caractérisée en ce que les fibres brutes végétales composent environ 0,5% en poids de la glace alimentaire.

7. Glace alimentaire suivant la revendication 5 ou 6, caractérisée en ce que les stabilisants composent jusqu'à 15% en poids de la glace alimentaire.

8. Glace alimentaire suivant l'une quelconque des revendications 1 à 7, caractérisée en ce que les protéines de lait et de petit-lait sont présentes à l'état natif et sont contenues à environ 30% en poids.

9. Glace alimentaire suivant l'une quelconque des revendications 1 à 8, caractérisée en ce que les stabilisants ne comprennent aucun constituant synthétique.

10. Procédé de préparation industrielle de glace alimentaire suivant l'une quelconque des revendications 1 à 9, dans lequel on mélange les matières brutes et additifs prévus pour la formation de la crème et des stabilisants, aux matières premières et ensuite, on chauffe, on homogénéise, on refroidit et on soumet alors à un stockage intermédiaire avant la congélation, pour maturation, caractérisé en ce que le chauffage est réalisé à une température de plus de 85°C et avec un temps de maintien de la température d'au moins 1 minute.

11. Stabilisant pour la préparation industrielle de glace alimentaire avec une certaine quantité de jaune d'oeuf, caractérisé en ce que les autres constituants du stabilisant sont des protéines de lait et de petit-lait ainsi que des fibres brutes végétales.

12. Stabilisant suivant la revendication 11, caractérisé en ce qu'il contient jusqu'à 50% en poids de jaune d'oeuf, jusqu'à 60% en poids de protéines de petit-lait et jusqu'à 20% en poids de fibres brutes d'avoine.
